# EUROPÄISCHE PATENTSCHRIFT

(11) **EP 3 440 319 B1**
(45) Veröffentlichungstag und Bekanntmachung des Hinweises auf die Patenterteilung: **18.12.2019**
(21) Anmeldenummer: 17709660.9
(22) Anmeldetag: 08.03.2017
(51) Int. Cl.: F01D 25/24, F02C 6/12

(54) **TURBOLADER FÜR EINE BRENNKRAFTMASCHINE**
TURBOCHARGER FOR AN INTERNAL COMBUSTION ENGINE
TURBOCOMPRESSEUR POUR UN MOTEUR À COMBUSTION INTERNE

(30) Priorität: 06.04.2016 DE 102016205643
(43) Veröffentlichungstag der Anmeldung: 13.02.2019
(73) Patentinhaber: Continental Automotive GmbH, 30165 Hannover (DE)
(72) Erfinder: BOGNER, Mathias, 94315 Straubing (DE)
(86) Internationale Anmeldenummer: PCT/EP2017/055471
(87) Internationale Veröffentlichungsnummer: WO 2017/174287

(56) Entgegenhaltungen:
- EP-A2- 2 662 532
- DE-A1-102009 056 632
- DE-A1-102009 058 534
- US-A1- 2013 004 291

## Beschreibung

Die Erfindung betrifft einen Turbolader für eine Brennkraftmaschine, der ein Lagergehäuse mit darin drehbar gelagerter Läuferwelle sowie ein Turbinengehäuse mit einem darin auf der Läuferwelle angeordneten Turbinenrad aufweist.

Abgasturbolader, oder auch kurz Turbolader genannt, werden vermehrt zur Leistungssteigerung bei Kraftfahrzeug-Verbrennungsmotoren eingesetzt. Dies geschieht immer häufiger mit dem Ziel den Verbrennungsmotor bei gleicher oder gar gesteigerter Leistung in Baugröße und Gewicht zu reduzieren und gleichzeitig den Verbrauch und somit den CO₂-Ausstoß, im Hinblick auf immer strenger werdende gesetzliche Vorgaben diesbezüglich, zu verringern. Das Wirkprinzip besteht darin, die im Abgasstrom enthaltene Energie zu nutzen um den Druck im Ansaugtrakt des Verbrennungsmotors zu erhöhen und so eine bessere Befüllung des Brennraumes mit Luft-Sauerstoff zu bewirken und somit mehr Treibstoff, Benzin oder Diesel, pro Verbrennungsvorgang umsetzen zu können, also die Leistung des Verbrennungsmotors zu erhöhen.

Dazu weist der Turbolader eine im Abgastrakt des Verbrennungsmotors angeordnete Turbine, einen im Ansaugtrakt angeordneten Verdichter und ein dazwischen angeordnetes Läuferlager in einem Lagergehäuse auf. Die Turbine weist ein Turbinengehäuse und ein darin angeordnetes, durch den Abgasmassenstrom angetriebenes Turbinenrad auf. Der Verdichter weist ein Verdichtergehäuse und ein darin angeordnetes, einen Ladedruck aufbauendes Verdichterrad auf. Das Turbinenrad und das Verdichterrad sind auf den sich gegenüberliegenden Enden einer gemeinsamen Welle, der sogenannten Läuferwelle, drehfest angeordnet und bilden so den sogenannten Turboladerläufer. Die Läuferwelle erstreckt sich axial zwischen Turbinenrad und Verdichterrad durch das zwischen Turbine und Verdichter in einem Lagergehäuse angeordnete Läuferlager und ist in diesem, in Bezug auf die Läuferwellendrehachse, radial und axial drehgelagert. Gemäß diesem Aufbau treibt das vom Abgasmassenstrom angetriebene Turbinenrad über die Läuferwelle das Verdichterrad an, wodurch der Druck im Ansaugtrakt des Verbrennungsmotors, bezogen auf den Frischluftmassenstrom hinter dem Verdichter, erhöht und dadurch eine bessere Befüllung des Brennraumes mit Luft-Sauerstoff bewirkt wird.

Das Turbinengehäuse weist einen oder mehrere ringförmig um die Läuferwellendrehachse, die gleichzeitig die Turboladerachse repräsentiert, und das Turbinenrad angeordnete, sich schneckenförmig zum Turbinenrad hin verjüngende Abgas-Ringkanäle auf, die im Weiteren einfach als Spiralgang bezeichnet werden. Dieser Spiralgang weist einen tangential nach außen gerichteten Abgaszuführkanal mit einem Krümmer-Anschlussstutzen zum Anschluss an einen Abgaskrümmer eines Verbrennungsmotors auf, durch den der Abgasmassenstrom in den Spiralgang strömt. Der Spiralgang weist weiterhin eine zumindest über einen Teil des Innenumfanges verlaufende Spaltöffnung, den sogenannten Abgas-Eintrittsspalt, auf, der in zumindest anteilmäßig radialer Richtung auf das Turbinenrad hin gerichtet verläuft und durch den der Abgasmassenstrom auf das Turbinenlaufrad strömt.

Das Turbinengehäuse weist weiterhin einen Abgasabführkanal auf, der vom axialen Ende des Turbinenlaufrades weg in Richtung der Turboladerachse verläuft und einen Auspuff-Anschlussstutzen zum Anschluss an das Auspuffsystem des Verbrennungsmotors aufweist. Über diesen Abgasabführkanal wird der aus dem Turbinenrad austretende Abgasmassenstrom in das Auspuffsystem des Verbrennungsmotors abgeführt.

Insbesondere bei Otto-Verbrennungsmotoren sind, bedingt durch die gegenüber Diesel-Verbrennungsmotoren höheren Abgastemperaturen, die Turbine sowie das angrenzende Lagergehäuse mit Läuferwellenlagerung erhöhten, stark wechselnden Temperaturen ausgesetzt, die bis über 1000°C erreichen können. Dies erfordert besondere Maßnahmen in Bezug auf die eingesetzten Werkstoffe, Wärmeisolation und Wärmeabführung. Insbesondere hochtemperaturfeste Werkstoffe stellen hier einen erheblichen Kostenfaktor dar.

Aus der DE 10 2009 058 534 A1 ist ein Abgasturbolader mit einem Lagergehäuse und einem ein tragende Käfigstruktur und eine gasführende Schalenstruktur umfassenden Turbinengehäuse bekannt. Das Turbinengehäuse ist über die Käfigstruktur an das Lagergehäuse angebunden und die Schalenstruktur ist an der Käfigstruktur angebunden. Die tragende Käfigstruktur weist eine in Radialrichtung erweiterte Schutzeinrichtung, insbesondere zum Containmentschutz, zum Hitzeschutz des Lagergehäuses oder zum Schutz der Schalenstruktur auf.

Die DE 10 2009 056 632 A1 offenbart einen Turbolader, welcher ein Radial-Axial-Laufrad aufweist, welches in einem Laufradgehäuse des Turboladers angeordnet ist und wobei das Laufradgehäuse ein Leitelement aufweist, welches wenigstens einen Teil der Rückwand einer geneigten oder schräg ausgebildeten Spirale des Laufradgehäuses bildet.

Aus der der US 2013/0004291 A1 ist eine Turboladervorrichtung mit einem Hitzeschild im Turbinengehäuse bekannt.

Eine Aufgabe, die der Erfindung zugrunde liegt, ist es deshalb, ein Konzept für einen Turbolader anzugeben, welches zu einer kostengünstigen Herstellung eines Turboladers beiträgt.

Zur Lösung dieser Aufgabe wird ein Turbolader für eine Brennkraftmaschine offenbart, der die im unabhängigen Patentanspruch 1 aufgeführten Merkmale aufweist. Dieser Turbolader weist ein Lagergehäuse mit einer darin um eine Läuferwellendrehachse drehbar gelagerten Läuferwelle auf. Das Lagergehäuse weist einen Lagerschild auf, der als senkrecht zur Läuferwellendrehachse angeordnete Gehäusestirnfläche ausgebildet ist bzw. diese darstellt. Der Turbolader weist weiterhin ein Turbinenrad auf, welches drehfest auf der Läuferwelle angeordnet ist und eine Turbinenradrückseite aufweist, die dem Lagerschild zugewandt ist . Weiter weist der Turbolader ein Turbinengehäuse auf, welches mechanisch an dem Lagergehäuse festgelegt ist, wobei das Turbinenrad in dem Turbinengehäuse angeordnet ist. Der Turbolader weist einen zumindest teilweise durch das Turbinengehäuse ausgebildeten Spiralgang auf, der um das Turbinenrad herum angeordnet ist und über welchen ein Abgasstrom leitbar ist, zur Anströmung des Turbinenrads . Der erfindungsgemäße Turbolader ist des Weiteren dadurch gekennzeichnet, dass in dem Spiralgang ein erstes Isolierungselement angeordnet ist, zur thermischen Isolierung des Turbinengehäuses gegenüber dem Abgasstrom, das zumindest einen Teil einer Spiralganginnenwand abdeckt und welches als integralen Bestandteil einen integrierten Lagergehäusehitzeschild aufweist, zur thermischen Isolierung des Lagergehäuses gegenüber dem Abgasstrom. Das erste Isolierungselement weist einen im Bereich des Spiralgangs angeordneten, ersten Abschnitt mit einem Isoliermaterial zur Wärmeisolierung und einen an den ersten Abschnitt anschließenden, im Bereich des Lagerschildes angeordneten zweiten Abschnitt mit dem integrierten Lagergehäusehitzeschild auf.

Bei dem ersten Isolierungselement handelt es sich um ein Element, welches zum einen die Funktion hat, eine thermische Isolation von Wärme eines Abgasstromes gegenüber dem Turbinengehäuse zu bewirken, und zum anderen einen integrierten Lagergehäusehitzeschild aufweist, welches verhindert, dass zu viel Wärme des Abgasstromes über den Lagerschild in das Lagergehäuse und somit in die Lagerung der Läuferwelle eingetragen wird. Das Isolierungselement hat somit zwei Funktionen, für welche es unterschiedlich ausgebildete Abschnitte aufweist. Mittels der Isolierung wird somit eine thermische Isolation der genannten Gehäuseelemente gegenüber der Wärme des Abgases gewährleistet, so dass die Wärmeenergie des Abgasstromes nicht vor dem Anströmen des Turbinenrads über das Lagergehäuse und/oder das Turbinengehäuse abgeführt wird, insbesondere im Bereich des Spiralgangs und des Lagerschildes. Dies wäre thermodynamisch unerwünscht, da diese Energie unter anderem zum Antreiben des Turbinenrads verloren ginge. Zusätzlich kann mittels des einen Isolierungselements und des als integralen Bestandteil ausgebildeten Lagergehäusehitzeschilds ein übermäßiger Wärmeeintrag in die Lagerung der Läuferwelle verhindert werden, so dass beispielsweise Verkokungs- oder anderen nachteilige Effekte reduziert oder vermieden werden können.

Das erste Isolierungselement kann auch als Isolierinlay oder Isoliereinlage bezeichnet werden. Das erste Isolierungselement ist beispielsweise in den Spiralgang eingelegt und bildet so die Innenkontur des Spiralgangs. Mit anderen Worten deckt das erste Isolierungselement zumindest teilweise die Innenwand des Spiralgangs ab. Mit wieder anderen Worten kleidet das Isolierungselement den Spiralgang zumindest teilweise aus. Das erste Isolierungselement ist beispielsweise zumindest in einer dem Lagergehäuse und/oder Turbinengehäuse zugewandten Seite hinsichtlich einer Formgebung an eine Kontur des gegebenenfalls durch die beiden Gehäuse gebildeten Spiralgangs angepasst, so dass das erste Isolierungselement zumindest teilweise einen Formschluss mit der Kontur der beiden Gehäuse eingeht.

Der Spiralgang kann dabei nur teilweise in dem Turbinengehäuse ausgebildet sein, kann aber auch vollständig durch das Turbinengehäuse gebildet sein. Im ersten Fall kann der Spiralgang auch zumindest teilweise durch das Lagergehäuse gemeinsam mit dem Turbinengehäuse gebildet werden, wobei die entsprechend ausgeformte axiale Stirnfläche des Lagergehäuses beispielsweise die Rückwand des Turbinengehäuses bildet.

Dadurch, dass das erste Isolierungselement zugleich die Funktion der Wärmeisolierung des Spiralgangs sowie die Wärmeabschirmung des Lagergehäuses durch das Lagergehäusehitzeschild in sich vereint, muss, anstatt zweier Einzelkomponenten, nur ein Bauteil, nämlich das erste Isolierungselement, bei der Montage des Turboladers vorgehalten und montiert werden. Dies reduziert die Kosten für Bauteile und Montage und ermöglicht die Verwendung preisgünstigerer Werkstoffe zum Beispiel für das Turbinengehäuse aufgrund der niedrigeren Temperaturniveaus. Die sich aus der durchgängigen Konturgestaltung der Innenseite des Isolierungselementes mit integriertem Lagergehäusehitzeschild ergebende glatte und unterbrechungsfreie Spiralganginnenseite über das Lagerschild hinweg ermöglicht eine störungsfreie Strömungsführung des Abgasstromes auf das Turbinenrad zu. Dies reduziert Strömungsverluste und ergibt einen verbesserten Wirkungsgrad der Turbine. Gleichzeitig wird durch die thermische Isolierung des Abgases gegenüber den Gehäusekomponenten der Energieverlust durch Abkühlung des Abgases reduziert, was ebenfalls zur Steigerung des Wirkungsgrades der Turbine beiträgt.

Das erste Isolierungselement weist einen, im Bereich des Spiralgangs angeordneten, ersten Abschnitt mit einem Isoliermaterial zur Wärmeisolierung und einen an den ersten Abschnitt anschließenden, im Bereich des Lagerschildes angeordneten zweiten Abschnitt mit dem integrierten Lagergehäusehitzeschild auf. Durch die räumliche Aufteilung des ersten Isolierungselements in zwei Abschnitte, können die beiden Funktionen, wie eingangs erläutert, verwirklicht werden. Beispielsweise ist der erste Abschnitt so angeordnet, dass dieser den Wärmeeintrag in die durch einen Flanschbereich des Lagergehäuses oder das Turbinengehäuse selbst gebildete Spiralgang- oder Turbinengehäuserückwand reduziert. Vornehmlich ist dazu der erste Abschnitt im Spiralgang angeordnet. Der zweite Abschnitt mit dem integrierten Lagergehäusehitzeschild erstreckt sich beispielsweise über das Lagerschild des Lagergehäuses hinweg und zwischen der Turbinenradrückseite und dem Lagerschild des Lagergehäuses, um dort den Wärmeeintrag in das Lagergehäuse zu verhindern. Bei dem genannten Isoliermaterial handelt es sich beispielsweise um einen Keramik-Werkstoff, um Glasfaser-Gewebe oder andere Werkstoffe mit wärmeisolierenden Eigenschaften.

Eine Ausführung des oben beschriebenen erfindungsgemäßen Turboladers ist dadurch gekennzeichnet, dass der integrierte Lagergehäusehitzeschild in einem Bereich radial außerhalb des Turbinenrads eine Kontur aufweist, die zur Strömungsführung des Abgasstroms auf das Turbinenrad hin ausgebildet ist, also quasi zumindest einen Teil einer strömungsführenden Rückwand des Turbinengehäuses bildet und in diesem Bereich den Lagerschild und gegebenenfalls zumindest einen Teil des Flanschbereichs des Lagergehäuses abdeckt. Dadurch werden auch eventuell radial außerhalb der Turbinenradrückseite liegende Bereiche des Lagerschildes des Lagergehäuses thermisch abgeschirmt und dies ermöglicht eine durchgängige verlustarme Strömungsführung des Abgasstromes bis in unmittelbare Nähe der Beschaufelung des Turbinenrades, was so dazu beiträgt Wirkungsgradverluste durch Strömungsverluste und eine Hinterströmung des Turbinenrades zu vermeiden.

Eine weitere Ausführung der zuvor beschriebenen Ausführungen des Turboladers ist dadurch gekennzeichnet, dass der integrierte Lagergehäusehitzeschild zumindest über einen radialen Teilbereich des Turbinenrades hinweg zwischen dem Lagerschild und der Turbinenradrückseite angeordnet ist. Dadurch wird besonders effektiv eine übermäßige Erwärmung des lagernahen Bereichs des Lagerschildes und somit des Läuferwellenlagers verhindert.

Gemäß einer weiteren Ausgestaltung des erfindungsgemäßen Turboladers ist das erste Isolierungselement im festgelegten Zustand des Turbinengehäuses, also im zusammengebauten Zustand der Turbine, zwischen dem Turbinengehäuse und dem Lagergehäuse festgeklemmt. Dadurch ist es möglich, das Isolierungselement ohne zusätzliche Elemente wie Befestigungselemente oder dergleichen in dem Turbolader mechanisch sicher zu fixieren. Optional wird durch die Klemmwirkung erreicht, dass das Isolierungselement, insbesondere der Lagergehäusehitzeschild, vorgespannt ist und somit eine Federwirkung erzielen kann. Die Federwirkung ist im Betrieb vorteilhaft, da sich das Lagergehäusehitzeschild entsprechend der hohen vorherrschenden Temperaturen im Betrieb ausdehnt, wobei durch die gegebenen elastischen Ausweichmöglichkeiten eine Verformung des Lagergehäusehitzeschildes vermieden werden kann.

Gemäß einer weiteren Ausgestaltung weist der Turbolader ein weiteres Isolierungselement auf, welches ebenfalls Isoliermaterial zur Wärmeisolierung aufweist. Dabei ist das weitere Isolierungselement zumindest teilweise oder auch komplett in dem Spiralgang angeordnet und deckt zusammen mit dem ersten Isolierungselement die Spiralganginnenwand zumindest teilweise oder auch vollständig ab. Das erste und das zweite Isolierungselement können auch zusammen als ein zweiteiliges Isolierungselement betrachtet werden. Dem entsprechend würde das Isolierungselement ein erstes und ein weiteres Teil-Element aufweisen, wobei das erste Teil-Element des Isolierungselements in einen ersten und zweiten Abschnitt unterteilt ist, und wobei der erste Abschnitt des ersten Teil-Elements des Isolierungselements ein Isoliermaterial zur Wärmeisolierung aufweist und in dem Spiralgang angeordnet ist und der zweite Abschnitt des ersten Teil-Elements des Isolierungselements das integrierte Lagergehäusehitzeschild aufweist.

Das weitere Isolierungselement bzw. das weitere Teil-Element hat also ausschließlich die Funktion der Wärmeisolierung des Spiralgangs, während das erste Isolierungselement bzw. das erste Teil-Element sowohl die Funktion der Wärmeisolierung des Spiralgangs als auch des integrierten Lagergehäusehitzeschilds erfüllt.

Dies hat den Vorteil, dass eine vollständige Wärmeisolierung des Spiralgangs und des Lagergehäuses auf einfache Weise separat hergestellt und in wenigen Montageschritten bei der Montage des äußeren Blechschicht des entsprechenden Isolierungselements, angeordnet, wobei die innere Blechschicht dem Innenraum des Spiralgangs und die äußere Blechschicht der Spiralganginnenwand des Spiralgangs zugewandt sind. Mit anderen Worten ist das Isoliermaterial von beiden Blechschichten gekapselt. Dadurch ist das Isoliermaterial vor physischen/mechanischen Einwirkungen in dem Spiralgang des Turbinengehäuses geschützt. Mit anderen Worten ist das Isoliermaterial des ersten Abschnitts des ersten Isolierungselements beziehungsweise das Isoliermaterial des weiteren Isolierungselements jeweils in einer durch die Blechschichten gebildeten Hülle oder Kapsel angeordnet.

Gemäß einer weiteren Ausgestaltung der vorgenannten Ausführung, bei der das Isoliermaterial zwischen Blechschichten angeordnet ist, weist die innere Blechschicht des ersten Abschnitts des ersten Isolierelements einen Fortsatz auf, der den sich über den zweiten Abschnitt (22) erstreckenden integrierten Lagergehäusehitzeschild bildet. Die innere Blechschicht ist dabei einfach radial nach innen hin verlängert, so dass sie sich zumindest über einen Teil des Lagerschildes des Lagergehäuses erstreckt. Dadurch wird zusammen mit der äußeren Blechschicht das Isoliermaterial im ersten Abschnitt gekapselt und in dem zweiten Abschnitt ein integrierter Lagergehäusehitzeschild ausgebildet. Auf diese Weise erübrigt sich eine separat herzustellende Verbindung zwischen dem ersten und dem zweiten Abschnitt des ersten Isolierungselements.

Gemäß einer weiteren Ausgestaltung einer der beiden unmittelbar vorgenannten Ausführungsformen ist die innere Blechschicht derart ausgebildet, dass diese eine Federwirkung aufbringen kann, die der Klemmung des ersten und/oder weiteren Isolierungselements (18, 19) zwischen Lagergehäuse (2) und Turbinengehäuse (15) entgegen gerichtet wirkt und so eine definierte Klemmkraft erzeugt. Mit anderen Worten ist der integrierte Lagergehäusehitzeschild federn ausgestaltet. Beispielsweise ist die innere Blechschicht dicker ausgeführt als die äußere Blechschicht, damit die Federwirkung und das Verspannen beziehungsweise die Klemmwirkung realisiert werden können.

Gemäß einer weiteren Ausgestaltung ist das Turbinengehäuse einteilig ausgebildet. Dies soll heißen, das Turbinengehäuse ist beispielsweise als einstückiges Gussteil gestaltet. Dabei ist es vorteilhaft, wenn das Turbinengehäuse keine eigene Rückwand des Spiralgangs aufweist, sondern die Spiralgang-Rückwand zum Beispiel durch einen Flanschbereich des Lagergehäuses gebildet wird. Dadurch lassen sich Hinterschneidungen vermeiden, die bei der Herstellung des Gussteils hinderlich sein können. Ein erstes Isolierungselement, das als integralen Bestandteil den integrierten Lagergehäusehitzeschild aufweist, ist hierbei vorteilhaft, da eine vom Turbinengehäuse unabhängige Vormontage des ersten Isolierungselements also des interiereten Lagergehäusehitzeschildes am Lagergehäuse und gleichzeitig der Wärmeisolierung zumindest der Spiralgang-Rückseite, also der auf der Seite des Lagergehäuses liegenden Spiralganginnenwand, auf einfache Weise erfolgen kann.

Unter Zuhilfenahme der angehängten Figuren, wird nachfolgend ein Ausführungsbeispiel des erfindungsgemäßen Turboladers beschrieben. Gleichartige oder gleichwirkende Elemente sind figurenübergreifend mit den gleichen Bezugszeichen bezeichnet.

In den Figuren zeigen:
- Figur 1: eine Teilschnittansicht einer Kernbaugruppe eines Turboladers, ohne Verdichtergehäuse und Turbinengehäuse, bestehend aus dem Lagergehäuse mit Läuferwellenlagerung und dem Turboladerläufer, gemäß dem Stand der Technik und
- Figur 2: eine vergrößerte, schematische Schnittdarstellung eines das Turbinengehäuse mit Spiralgang, das Lagergehäuse und das Turbinenrad beinhaltenden Ausschnitts eines Turboladers gemäß einem Ausführungsbeispiel der Erfindung.

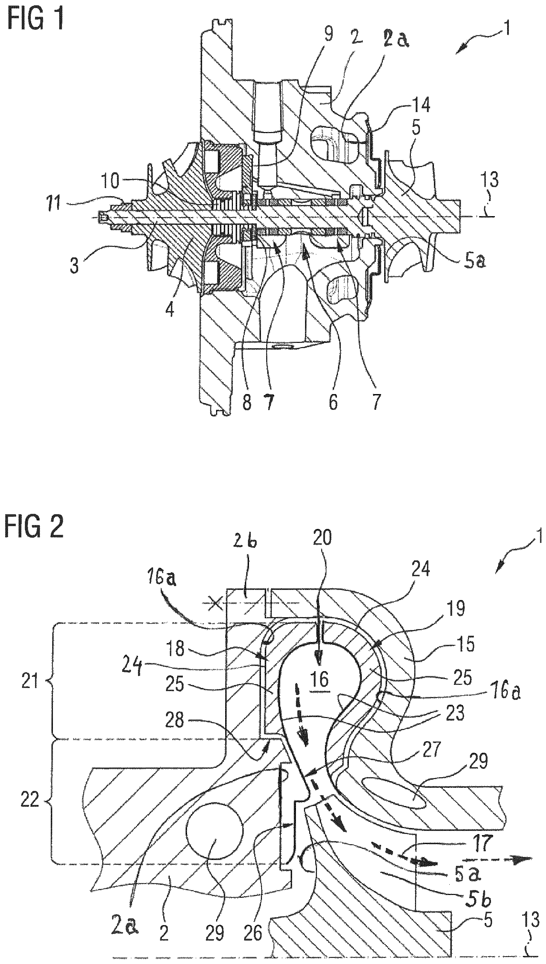

Figur 1 zeigt eine Schnittansicht einer Kernbaugruppe eines Turboladers 1, insbesondere eines Abgasturboladers insbesondere für den Verbrennungsmotor eines Kraftfahrzeugs, bestehend aus dem Lagergehäuse 2 und dem Turboladerläufer mit Turbinenrad 5, Verdichterrad 4 und Läuferwelle 3, welcher nachfolgend exemplarisch beschrieben wird. Verdichtergehäuse und Turbinengehäuse sind in dieser Figur nicht dargestellt. Der Turbolader 1 ist für eine Brennkraftmaschine, auch als Verbrennungsmotor bezeichnet, insbesondere für einen Hubkolben-Verbrennungsmotor, vorgesehen. Der Turbolader 1 weist ein Lagergehäuse 2 auf, in welchem eine Läuferwelle 3, die auch als Turboladerwelle bezeichnet wird, drehbar gelagert ist.

An einem Ende der Läuferwelle 3 ist ein Verdichterrad 4 für einen Verdichter vorgesehen, welches an der Läuferwelle festgelegt ist. An dem gegenüberliegenden Ende der Läuferwelle 3 ist ein Turbinenrad 5 für eine Abgasturbine vorgesehen, welches ebenfalls an der Läuferwelle 3 festgelegt ist. Im Betrieb des Turboladers 1 ist dieser derart an dem Verbrennungsmotor angeordnet, dass das Turbinenrad 5 in dem Abgasstrang und das Verdichterrad 4 in dem Frischgasstrang des Verbrennungsmotors angeordnet sind.

Im Betrieb der genannten Brennkraftmaschine bzw. des Verbrennungsmotors treibt ein Abgasstrom im Abgasstrang das Turbinenrad 5 an, welches über die Läuferwelle das Verdichterrad 4 antreibt. Das Verdichterrad 4 verdichtet im Frischgasstrang befindliches Frischgas, bevor dieses dem Zylinder des Verbrennungsmotors zugeführt wird. Somit ist es möglich, einen Wirkungsgrad des Verbrennungsmotors zu erhöhen.

Die im Folgenden beschriebenen Komponenten des Turboladers 1 werden typischerweise von der Seite des Verdichters aus im Lagergehäuse 2 beziehungsweise an der Läuferwelle 3 montiert. Demzufolge verjüngt sich die Läuferwelle 3 in Richtung des Verdichters über mehrere Wellenabsätze, um die Montage zu ermöglichen.

Die Läuferwelle 3 ist über zwei in einer Bohrung 6 des Lagergehäuses 2 eingepasste, ölgeschmierte Radiallager 7 drehbar um eine Läuferwellendrehachse 13 der Läuferwelle 3 gelagert. Dabei verhindert ein Wellenabsatz der Läuferwelle 3 ein Verrutschen des gemäß Figur 1 rechten Radiallagers 7 in Richtung des Turbinenrads 5. An das gemäß Figur 1 linke Radiallager 7 schließt eine Axiallagerscheibe 8 an, die an einem weiteren Wellenabsatz der Läuferwelle 3 positioniert ist.

An die Axiallagerscheibe 8 anschließend, ist eine Dichtungsbuchse 10 mit einer integrierten weitern Axiallagerscheibe auf der Läuferwelle 3 angeordnet. Zwischen den genannten Axiallagerscheiben ist ein gehäusefestes axiales Gegenlager 9 im Lagergehäuse 2 angeordnet. Das axiale Gegenlager 9 ist dazu eingerichtet, Axialkräfte, die auf die Läuferwelle 3 einwirken, über die beiden Axiallagerscheiben aufzunehmen.

An der Dichtungsbuchse 10 anliegend ist das Verdichterrad 4 auf der Läuferwelle 3 angeordnet und im Ausführungsbeispiel mittels einer Wellenmutter 11 gegen die Dichtungsbuchse 10, die Axiallagerscheibe 8 und somit gegen den entsprechenden Wellenabsatz der Läuferwelle 3 geschraubt. Dadurch wird das Verdichterrad 4, die Dichtungsbuchse 10 und die Axiallagerscheibe 8 zwischen dem entsprechenden Wellenabsatz und der Wellenmutter 11 festgespannt.

Durch die hohen Temperaturen des über das Turbinenrad geleiteten Abgasstromes entsteht ein hoher Wärmeeintrag in das Lagergehäuse 2, insbesondere in die beschriebene Lagerung der Läuferwelle 3. Diese kann zu einer Verkokung des Öls in den Lagern 7 und in der Folge zu einer Beschädigung bis hin zu einem Ausfall der Lager 7 führen. Um diesen Wärmeeintrag zu reduzieren oder weitgehend zu vermeiden, weist der Turbolader 1 weiterhin einen herkömmlichen Lagergehäusehitzeschild 14 auf. Dieser herkömmliche Lagergehäusehitzeschild 14 ist scheibenartig mit mehreren Stufen ausgebildet und hat eine zentrale Öffnung, mittels welcher er auf einen Befestigungsbund des Lagergehäuses 2 geschoben ist. Im montierten Zustand erstreckt sich ein Teil des herkömmlichen Lagergehäusehitzeschilds 14 wie gezeigt in einen Zwischenraum zwischen der Turbinenradrückseite 5a und dem Lagerschild 2a des Lagergehäuses 2. Das Lagerschild 2a ist die im wesentlichen senkrecht zur Läferwellendrehachse 13 angeordnete und gegebenenfalls abgestuft ausgebildete axiale Stirnfläche des Lagergehäuses 2. Dabei bildet der herkömmliche Lagergehäusehitzeschild 14 eine Abdeckung des Lagerschildes 2a, die die Funktion einer Wärmeabschirmung hat. Der herkömmliche Lagergehäusehitzeschild 14 wird durch Festlegen eines in Figur 1 nicht dargestellten Turbinengehäuses mit dem Lagergehäuse 2 axial verspannt, insbesondere über einen oder mehrere Flansche des Turbinengehäuses.

Figur 2 zeigt eine vergrößerte, schematische Schnittdarstellung eines Ausschnitts eines Turboladers 1, der einen Teil des Turbinengehäuses 15, einen Teil des Lagergehäuses 2, den durch Turbinengehäuse 15 und Lagergehäuse 2 ausgebildeten Spiralgang 16 sowie einen Teil des Turbinenrads 5 umfasst. Der Turbolader 1 entspricht weitestgehend, insbesondere funktionell, der Ausführungsform gemäß Figur 1, unterscheidet sich jedoch durch die erfindungsgemäßen Merkmale und die konstruktiven Ausgestaltung des Aufbaus.

Das Turbinengehäuse 15 des Turboladers 1 ist hier beispielsweise aus einem Leichtmetallwerkstoff wie Aluminium hergestellt, welches im Vergleich zu einem hochtemperaturfesten Gusswerkstoff billiger und auch leichter ist, jedoch nicht hochtemperaturfest ist und Wärme aus dem Inneren des Turbinengehäuses 15 schneller aufnimmt.

Das Turbinengehäuse 15 ist über einen (außenliegenden) Flanschbereich 2b des Lagergehäuses 2 mit dem Lagergehäuse 2 mechanisch fest verbunden, insbesondere verschraubt. Das Turbinengehäuse 15 bildet mit dem Lagergehäuse 2, insbesondere mit dem Flanschbereich 2b des Lagergehäuses 2, einen Spiralgang 16 aus, über welchen der Abgasstrom im Betrieb des Turboladers 1 auf das Turbinenrad 5 zur Anströmung dessen geleitet wird. Anschließend strömt der Abgasstrom, hier mit gestrichelten Pfeilen 17 angedeutet, axial in Richtung der Läuferwellendrehachse 13 aus dem Turbinengehäuse 15 aus.

Damit vor der Anströmung des Abgasstroms auf das Turbinenrad 5 die Wärmeenergie nicht oder nur unwesentlich über das Lagergehäuse 2 und das Turbinengehäuse 15 aufgenommen und abgeführt wird, ist der Spiralgang 16 zumindest teilweise, hier jedoch komplett, mit Isolierungselementen 18, 19 ausgekleidet.

Die Isolierungselemente 18 und 19 sind umlaufend über den Umfang des Spiralkanals 16 ausgebildet und konzentrisch bezüglich der Läuferwellendrehachse 13 angeordnet. Die beiden Isolierungselemente 18 und 19, die auch als Isolierinlays, Isolierschichten oder Isolierlagen bezeichnet werden können, kleiden den Spiralgang 16 erfindungsgemäß zumindest teilweise, in diesem Ausführungsbeispiel jedoch komplett aus und sind so angeordnet, dass diese die Spiralganginnenwand 16a nahezu übergangslos abdecken. Die Formgebung des ersten Isolierungselements 18 und des weiteren Isolierungselements 19 ist hierzu der Kontur der Spiralganginnenwand 16a des Spiralgangs 16, wie in Figur 2 gezeigt, angepasst. Die beiden Isolierungselemente 18, 19 können auch als ein Isolierungselement betrachtet werden, welches über den Umfang im Wesentlichen hälftig geteilt ist.

Das erste Isolierungselement 18 weist einen ersten Abschnitt 21 und einen zweiten Abschnitt 22 auf. Der erste Abschnitt 21 dient als thermische Isolation für den auf der Seite des Lagergehäuses 2 liegenden Teil der Spiralganginnenwand 16a, der auch als Spiralgangrückwand bezeichnet werden kann und in diesem Ausführungsbeispiel durch den Flanschbereich 2b des Lagergehäuses 2 gebildet wird. Gleichzeitig übergreift das erste Isolierungselement 18 einen Teil des Turbinengehäuses 15 in axialer Richtung der Läuferwellendrehachse und dient so auch zur thermischen Isolation diesen Bereichs des Turbinengehäuses 15. Der erste Abschnitt 21 weist ein Isoliermaterial 25 auf, welches zwischen einer inneren Blechschicht 23 und einer äußeren Blechschicht 24 angeordnet ist, wobei die innere Blechschicht 23 dem Innenraum 20 des Spiralgangs 16 und somit im Betrieb des Turboladers 1 dem Abgasstrom zugewandt ist und wobei die äußere Blechschicht 24 der Spiralganginnenwand 16a des Lagergehäuses 2 und/oder des Turbinengehäuses 15 zugewandt ist. Mit anderen Worten bilden die Blechschichten 23, 24 eine Blechhülle, die das Isoliermaterial 25 begrenzt bzw. umhüllt oder kapselt. Die beiden Blechschichten 23, 24 sind dazu beispielsweise miteinander verbunden, zum Beispielpunktverschweißt. Bei dem Isoliermaterial 25 handelt es sich beispielsweise um Keramik, um Glasfasergewebe oder auch andere wärmeisolierend wirkende Werkstoffe.

Der zweite Abschnitt 22 des ersten Isolierungselements 18 weist erfindungsgemäß einen integrierten Lagergehäusehitzeschild 26 auf. Hierzu ist in diesem Ausführungsbeispiel die innere Blechschicht 23, die das Isoliermaterial 25 des ersten Abschnitts abdeckt, einfach verlängert und weist somit einen Fortsatz auf, der als integraler Lagergehäusehitzeschild 26 dient, der das Lagerschild 2a des Lagergehäuses 2 erfindungsgemäß zumindest zu einem Teil, abdeckt. Somit weist das erste Isolierungselement den integralen Lagergehäusehitzeschild 26 als integralen Bestandteil auf.

Der integrale Lagergehäusehitzeschild 26 ist in diesem Ausführungsbeispiel radial nach innen, auf die Läuferwellendrehachse 13 zu geführt, bis in den Zwischenraum zwischen dem Lagerschild 2a und der Turbinenradrückseite 5a und deckt so den Lagerschild 2a nahezu vollständig ab.

Radial außerhalb der Turbinenradrückseite 5a weist der integrierte Lagergehäusehitzeschild 26 einen strömungsführenden Bereich 27 auf, der eine Kontur aufweist, die zur Strömungsführung des Abgasstroms auf das Turbinenrad hin ausgebildet ist und so gleichzeitig als Leitelement für den Abgasstrom in Richtung auf die Beschaufelung 5b des Turbinenrads 5 hin dient, um die Strömung aus dem Spiralgang 16 auf das Turbinenrad 5 zu leiten, insbesondere unter einem bestimmten Winkel bezüglich der Läuferwellendrehachse 13.

Das integrierte Lagergehäusehitzeschild 26 bildet so also quasi zumindest einen Teil einer strömungsführenden Rückwand des Turbinengehäuses 15 und deckt in diesem Bereich den Lagerschild 2a und gegebenenfalls zumindest einen Teil des Flanschbereichs 2b des Lagergehäuses 2 ab.

Das weitere Isolierungselement 19 ist entsprechend dem ersten Abschnitt 21 des ersten Isolierungselements 18 ausgebildet und dient ausschließlich der thermischen Isolation des Turbinengehäuses 15 mittels des Isoliermaterials 25.

Mit anderen Worten integriert das lagergehäuseseitige erste Isolierungselement 18 den integrierten Lagergehäusehitzeschild 26, während das turbinengehäuseseitige weitere Isolierungselement 19 der thermischen Isolation der turbinengehäuseseitgen Spiralganginnenseite dient.

Die innere Blechschicht 23 beider Isolierungselemente 18, 19, die dem Innenraum 20 des Spiralgangs 16 zugewandt ist, insbesondere des ersten Isolierungselements 18, ist hinsichtlich ihrer Dicke derart ausgebildet, dass eine Federwirkung aufgebracht werden kann. Dies ist wie eingangs beschrieben notwendig, um im Betrieb einen Toleranzausgleich und eine Wärmedehnung zu ermöglichen. Beispielsweise weist die innere Blechschicht 23 eine Dicke oder Wandstärke von 0,8 mm und die äußere Blechschicht 24 eine entsprechende Dicke oder Wandstärke von 0,2 mm auf.

Für die Montage des Turboladers 1 wird in diesem Ausführungsbeispiel zunächst das erste Isolierungselement 18 auf das Lagerschild des Lagergehäuses 2 aufgelegt und zum Beispiel mittels eines am Lagerschild 2a ausgebildeten umlaufenden Befestigungsbundes zentriert oder auf diesen aufgesteckt. Daraufhin wird die Rumpfgruppe des Turboladers 1 montiert, indem unter anderem das Turbinenrad 5 mit der Läuferwelle 3 in das Lagergehäuse 2 eingeschoben wird. Das erste Isolierungselement 18 befindet sich somit zumindest zum Teil in dem Zwischenraum zwischen dem Lagerschild 2a des Lagergehäuse 2 und der Turbinenradrückseite 5a. Anschließend wird das weitere Isolierungselement 19 in das Turbinengehäuse 15, in den turbinengehäuseseitigen Abschnitt des Spiralgangs 16 eingelegt. Im Anschluss daran wird dann das Turbinengehäuse 15 mit dem Lagergehäuse2 vereint und an dem Flanschbereich 2b des Lagergehäuses 2 mechanisch festgelegt, etwa verschraubt. Durch entsprechende maßliche Gestaltung der Isolierungselemente und die Verschraubung wird eine Klemmwirkung über das Turbinengehäuse 15 und das Lagergehäuse 2 auf beide Isolierungselemente 18 und 19 erbracht, so dass die Isolierungselemente 18, 19 mechanisch sicher festgelegt bzw. festgeklemmt sind.

Optional können in dem Lagergehäuse 2 sowie in dem Turbinengehäuse 15 Kühlkanäle 29 vorgesehen sein, in denen ein Kühlmedium wie Wasser zur Aufnahme und Abtransport von Wärmeenergie fließt. Dadurch kann das Temperaturniveau im Lagergehäuse 2 und in Teilbereichen des Turbinengehäuses 15 weiter gesenkt werden, was sich positiv auf den Verschleiß und übermäßige Bauteilbeanspruchungen aufgrund der eingetragenen Wärmeenergie auswirkt.

Optional ist es auch denkbar, anstelle des turbinenseitigen Kühlkanals 29 das zweite Isolierungselement 18 über diesen als Dichtkontur 30 bezeichneten Bereich hinweg Richtung Turbinenrad 5 zu verlängern oder ein weiteres Isolierungselement vorzusehen. Das erste Isolierungselement mit dem integrierten Lagergehäusehitzeschild 26 ermöglicht die eingangs genannten Vorteile hinsichtlich einer kostengünstigen Herstellung und Montage des Turboladers 1. Insbesondere kann das Turbinengehäuse 15 in vorteilhafter Weise und wie zuvor beschrieben einteilig ausgeführt sein, was verfahrenstechnische Vorteile und reduzierte Kosten bei der Herstellung des Turbinengehäuses ermöglicht. Zudem kann das Turbinengehäuse 15 aus einem leichteren, billigeren Material im Vergleich zu einem hochtemperaturfesten Gusswerkstoff hergestellt werden. Darüber hinaus wirkt sich die hindernisfreie Strömungsführung und der geringere Temperaturverlust des Abgasstromes positiv auf den Wirkungsgrad des Turboladers aus.

Es sei an dieser Stelle darauf hingewiesen, dass der anhand von Figuren 1 und 2 beschriebene Turbolader 1 hinsichtlich konstruktiver Ausgestaltungen und dem Vorhandensein der beschriebenen Elemente wie der Lagerungen oder dergleichen, als Ausführungsbeispiel zu verstehen ist, das den Gegenstand der Erfindung zunächst nicht über den Inhalt des Hauptanspruchs hinaus beschränken soll.

## Patentansprüche

1. Turbolader (1) für eine Brennkraftmaschine, aufweisend
- ein Lagergehäuse (2), in dem eine Läuferwelle (3) um eine Läuferwellendrehachse (13) drehbar gelagert ist und das einen Lagerschild (2a) aufweist, der als senkrecht zur Läuferwellendrehachse (13) angeordnete Gehäusestirnfläche ausgebildet ist;
- ein Turbinenrad (5), welches drehfest auf der Läuferwelle (3) angeordnet ist und eine Turbinenradrückseite (5a) aufweist, die dem Lagerschild (2a) zugewandt ist;
- ein Turbinengehäuse (15), welches mechanisch an dem Lagergehäuse (2) festgelegt ist, wobei das Turbinenrad (5) in dem Turbinengehäuse (15) angeordnet ist;
- einen zumindest teilweise durch das Turbinengehäuse (15) ausgebildeten Spiralgang (16), der um das Turbinenrad (5) herum angeordnet ist und über welchen ein Abgasstrom leitbar ist, zur Anströmung des Turbinenrads (5) und **dadurch gekennzeichnet, dass**
in dem Spiralgang (16) ein erstes Isolierungselement (18) angeordnet ist, zur thermischen Isolierung des Turbinengehäuses (15) gegenüber dem Abgasstrom zumindest einen Teil einer Spiralganginnenwand (16a) abdeckt und welches als integralen Bestandteil einen integrierten Lagergehäusehitzeschild (26) aufweist, zur thermischen Isolierung des Lagergehäuses (2) gegenüber dem Abgasstrom, wobei das erste Isolierungselement (18) einen im Bereich des Spiralgangs (16) angeordneten, ersten Abschnitt (21) mit einem Isoliermaterial (25) zur Wärmeisolierung und einen an den ersten Abschnitt (21) anschließenden, im Bereich des Lagerschildes (2a) angeordneten zweiten Abschnitt (22) mit dem integrierten Lagergehäusehitzeschild (26) aufweist.

2. Turbolader (1) nach Anspruch 1, **dadurch gekennzeichnet, dass** der integrierte Lagergehäusehitzeschild (26) in einem Bereich radial außerhalb des Turbinenrads (5) eine Kontur aufweist, die zur Strömungsführung des Abgasstroms auf das Turbinenrad (5) hin ausgebildet ist.

3. Turbolader (1) nach Anspruch 1 oder 2, **dadurch gekennzeichnet, dass** der integrierte Lagergehäusehitzeschild (26) zumindest über einen radialen Teilbereich des Turbinenrades (5) hinweg zwischen dem Lagerschild (2a) und der Turbinenradrückseite (5a) angeordnet ist.

4. Turbolader (1) nach Anspruch 1, wobei das erste Isolierungselement (18) im festgelegten Zustand des Turbinengehäuses (15) zwischen dem Turbinengehäuse (15) und dem Lagergehäuse (2) festgeklemmt ist.

5. Turbolader (1) nach einem der Ansprüche 1 bis 4, aufweisend ein weiteres Isolierungselement (19), welches Isoliermaterial (25) zur Wärmeisolierung aufweist, und wobei das weitere Isolierungselement (19) zumindest teilweise in dem Spiralgang (16) angeordnet ist und die Spiralganginnenwand (16a) zusammen mit dem ersten Isolierungselement (18) zumindest teilweise oder vollständig abdeckt.

6. Turbolader (1) nach Anspruch 5, wobei das erste und das weitere Isolierungselement (18, 19) im festgelegten Zustand des Turbinengehäuses (15) am Lagergehäuse (2) zwischen dem Turbinengehäuse (15) und dem Lagergehäuse (2) gegeneinander festgeklemmt sind.

7. Turbolader (1) nach einem der Ansprüche 1 bis 6, wobei das Isoliermaterial (25) des ersten Isolierungselements (18) und/oder gegebenenfalls eines weiteren Isolierungselements (19) jeweils zwischen einer inneren Blechschicht (23) und einer äußeren Blechschicht (24) des jeweiligen Isolierungselements (18, 19) angeordnet ist, wobei die innere Blechschicht (23) dem Innenraum (20) des Spiralgangs (16) und die äußere Blechschicht (24) der Spiralganginnenwand (16a) des Spiralgangs (16) zugewandt sind.

8. Turbolader (1) nach Anspruch 7, wobei die innere Blechschicht (23) des ersten Abschnitts (21) des Isolierelements (18) einen Fortsatz aufweist, der den sich über den zweiten Abschnitt (22) erstreckenden integrierten Lagergehäusehitzeschild (26) bildet.

9. Turbolader (1) nach Anspruch 7 oder 8, wobei die innere Blechschicht (23) derart ausgebildet ist, dass diese eine Federwirkung aufbringen kann, die der Klemmung des ersten und/oder weiteren Isolierungselements (18, 19) zwischen Lagergehäuse (2) und Turbinengehäuse (15) entgegengerichtet wirkt.

## Claims

1. Turbocharger (1) for an internal combustion engine, having
- a bearing housing (2), in which a rotor shaft (3) is mounted so as to be rotatable about a rotor shaft rotation axis (13) and which has an end shield (2a), which is designed as a housing end face arranged perpendicularly to the rotor shaft rotation axis (13);
- a turbine wheel (5), which is arranged for conjoint rotation on the rotor shaft (3) and has a turbine-wheel rear side (5a), which faces the end shield (2a);
- a turbine housing (15), which is fixed mechanically to the bearing housing (2), wherein the turbine wheel (5) is arranged in the turbine housing (15);
- a spiral path (16), which is formed at least partially by the turbine housing (15), is arranged around the turbine wheel (5), and via which an exhaust-gas flow can be conducted, for supplying a flow to the turbine wheel (5), **characterized in that**
a first insulating element (18) is arranged in the spiral path (16), for the thermal insulation of the turbine housing (15) with respect to the exhaust-gas flow, which covers at least part of a spiral-path inner wall (16a) and which has an integrated bearing housing heat shield (26) as an integral component, for the thermal insulation of the bearing housing (2) with respect to the exhaust-gas flow, wherein the first insulating element (18) has a first section (21), which is arranged in the region of the spiral path (16) and comprises an insulating material (25) for thermal insulation, and a second section (22), which adjoins the first section (21), is arranged in the region of the end shield (2a) and comprises the integrated bearing housing heat shield (26).

2. Turbocharger (1) according to Claim 1, **characterized in that** the integrated bearing housing heat shield (26) has, in a region radially outside the turbine wheel (5), a contour which is designed to guide the exhaust-gas flow toward the turbine wheel (5).

3. Turbocharger (1) according to Claim 1 or 2, **characterized in that** the integrated bearing housing heat shield (26) is arranged between the end shield (2a) and the turbine-wheel rear side (5a) at least over a radial partial region of the turbine wheel (5).

4. Turbocharger (1) according to Claim 1, wherein the first insulating element (18) is clamped firmly between the turbine housing (15) and the bearing housing (2) in the fixed state of the turbine housing (15).

5. Turbocharger (1) according to one of Claims 1 to 4, having a further insulating element (19), which comprises insulating material (25) for thermal insulation, and wherein the further insulating element (19) is arranged at least partially in the spiral path (16) and at least partially or completely covers the spiral-path inner wall (16a), together with the first insulating element (18).

6. Turbocharger (1) according to Claim 5, wherein the first and the further insulating element (18, 19) are clamped firmly relative to one another between the turbine housing (15) and the bearing housing (2) in the fixed state of the turbine housing (15) on the bearing housing (2).

7. Turbocharger (1) according to one of Claims 1 to 6, wherein the insulating material (25) of the first insulating element (18) and/or optionally of a further insulating element (19) is in each case arranged between an inner sheet-metal layer (23) and an outer sheet-metal layer (24) of the respective insulating element (18, 19), wherein the inner sheet-metal layer (23) faces the interior (20) of the spiral path (16) and the outer sheet-metal layer (24) faces the spiral-path inner wall (16a) of the spiral path (16).

8. Turbocharger (1) according to Claim 7, wherein the inner sheet-metal layer (23) of the first section (21) of the insulating element (18) has an extension, which forms the integrated bearing housing heat shield (26) extending over the second section (22).

9. Turbocharger (1) according to Claim 7 or 8, wherein the inner sheet-metal layer (23) is designed in such a way that it can exercise a spring effect, which acts counter to the clamping of the first and/or the further insulating element (18, 19) between the bearing housing (2) and the turbine housing (15).

## Revendications

1. Turbocompresseur (1) pour un moteur à combustion interne, présentant
- un logement de palier (2), dans lequel un arbre de rotor (3) est monté de façon rotative autour d'un axe de rotation d'arbre de rotor (13) et qui présente un flasque (2a), qui est réalisé sous la forme d'une face frontale de logement disposée perpendiculairement à l'axe de rotation d'arbre de rotor (13);
- une roue de turbine (5), qui est disposée de façon calée en rotation sur l'arbre de rotor (3) et qui présente un côté arrière de roue de turbine (5a), qui est tourné vers le flasque (2a);
- un boîtier de turbine (15), qui est fixé mécaniquement au logement de palier (2), dans lequel la roue de turbine (5) est disposée dans le boîtier de turbine (15);
- un passage spiral (16) formé au moins en partie par le boîtier de turbine (15), qui est disposé autour de la roue de turbine (5) et par lequel un courant de gaz d'échappement peut être conduit pour aborder la roue de turbine (5),
et **caractérisé en ce qu'**un premier élément d'isolation (18) est disposé dans le passage spiral (16), recouvre au moins une partie d'une paroi intérieure (16a) du passage spiral pour l'isolation thermique du boîtier de turbine (15) par rapport au courant de gaz d'échappement et qui présente comme composant intégral un bouclier thermique de logement de palier intégré (26), pour l'isolation thermique du logement de palier (2) par rapport au courant de gaz d'échappement, dans lequel le premier élément d'isolation (18) présente une première partie (21) disposée dans la région du passage spiral (16), avec un matériau isolant (25) pour l'isolation thermique et une deuxième partie (22) avec le bouclier thermique de logement de palier intégré (26) disposée dans la région du flasque (2a) et se raccordant à la première partie (21).

2. Turbocompresseur (1) selon la revendication 1, **caractérisé en ce que** le bouclier thermique de logement de palier intégré (26) présente dans une région radialement à l'extérieur de la roue de turbine (5) un contour, qui est configuré pour le guidage de l'écoulement du courant de gaz d'échappement en direction de la roue de turbine (5).

3. Turbocompresseur (1) selon une revendication 1 ou 2, **caractérisé en ce que** le bouclier thermique de logement de palier intégré (26) est disposé au moins par-dessus une région partielle radiale de la roue de turbine (5) entre le flasque (2a) et le côté arrière de roue de turbine (5a).

4. Turbocompresseur (1) selon la revendication 1, dans lequel le premier élément d'isolation (18) est serré, dans l'état immobilisé du logement de palier (15), entre le boîtier de turbine (15) et le logement de palier (2).

5. Turbocompresseur (1) selon l'une quelconque des revendications 1 à 4, présentant un autre élément d'isolation (19), qui présente un matériau isolant (25) pour l'isolation thermique, et dans lequel l'autre élément d'isolation (19) est disposé en partie dans le passage spiral (16) et recouvre au moins partiellement ou totalement de concert avec le premier élément d'isolation (18) la paroi intérieure (16a) du passage spiral.

6. Turbocompresseur (1) selon la revendication 5, dans lequel le premier et l'autre éléments d'isolation (18, 19) sont serrés l'un contre l'autre, dans l'état immobilisé du boîtier de turbine (15) sur le logement de palier (2), entre le boîtier de turbine (15) et le logement de palier (2).

7. Turbocompresseur (1) selon l'une quelconque des revendications 1 à 6, dans lequel le matériau isolant (25) du premier élément d'isolation (18) et/ou éventuellement d'un autre élément d'isolation (19) est disposé respectivement entre une couche de tôle intérieure (23) et une couche de tôle extérieure (24) de l'élément d'isolation respectif (18, 19), dans lequel la couche de tôle intérieure (23) est tournée vers l'espace intérieur (20) du passage spiral (16) et la couche de tôle extérieure (24) est tournée vers la paroi intérieure de passage spiral (16a) du passage spiral (16).

8. Turbocompresseur (1) selon la revendication 7, dans lequel la couche de tôle intérieure (23) de la première partie (21) de l'élément d'isolation (18) présente un prolongement, qui forme le bouclier thermique de logement de palier intégré (26) s'étendant sur la deuxième partie (22).

9. Turbocompresseur (1) selon la revendication 7 ou 8, dans lequel la couche de tôle intérieure (23) est réalisée de telle manière qu'elle puisse exercer un effet de ressort, qui agit de façon opposée au serrage du premier et/ou de l'autre élément d'isolation (18, 19) entre le logement de palier (2) et le boîtier de turbine (15).
